# EUROPEAN PATENT APPLICATION

(11) **EP 2 582 175 A1**
(43) Date of publication of application: **17.04.2013**
(21) Application number: 11782856.6
(22) Date of filing: 12.01.2011
(51) Int. Cl.: H04W 28/20

(54) **METHOD, DEVICE AND SYSTEM FOR SETTING MAXIMUM BANDWIDTH**

(71) Applicant: Huawei Technologies Co., Ltd., Shenzhen, Guangdong 518129 (CN)
(72) Inventor: LI, Yan, Shenzhen Guangdong 518129 (CN); ZHANG, Yanping, Shenzhen Guangdong 518129 (CN); ZHU, Fenqin, Shenzhen Guangdong 518129 (CN)
(74) Representative: Goddar, Heinz J.
(86) International application number: PCT/CN2011/070214
(87) International publication number: WO 2011/143939

(57) **Abstract**

Embodiments of the present invention provide a method for setting a maximum bandwidth, and the method includes: obtaining a bandwidth support capability of a UE; and according to the bandwidth support capability of the UE, authorizing a maximum bandwidth matching the bandwidth support capability for the UE, and delivering the maximum bandwidth authorized for the UE. In the technical solutions of the embodiments of the present invention, through obtaining the bandwidth support capability of the UE, the UE is authorized with the maximum bandwidth matching its capability, which can satisfy bandwidth demands of different types of terminals, make full use of a network resource, and solve a problem that a data service cannot be implemented due to being unable to activate a PDP context after a 3G radio network is upgraded to an HSPA+, the network supports the QoS greater than 16 M, but a part of terminals do not support a bandwidth parameter greater than 16 M whereas a bandwidth authorized by a network side is greater than 16 M.

## Description

### FIELD OF THE INVENTION

The present invention relates to the field of communication technologies, and in particular, to a method, an apparatus, and a system for setting a maximum bandwidth.

### BACKGROUND OF THE INVENTION

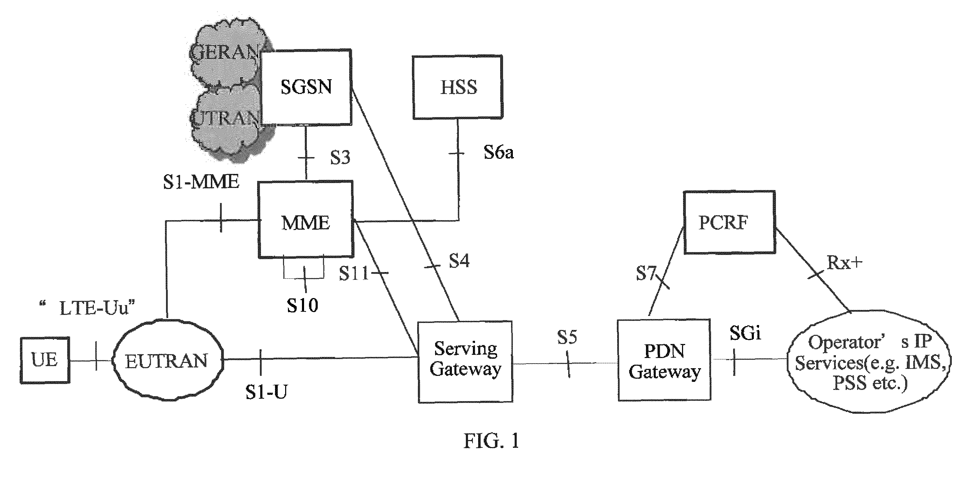

FIG. 1 is a schematic diagram of an EPS (Evolved Packet System, evolved packet core network system) architecture in the prior art. As shown in FIG. 1, the EPS mainly includes logic function entities such as a mobile management entity MME, a serving GPRS support node SGSN, a serving gateway Serving Gateway, a packet data network gateway PDN gateway, and a policy and charging functional entity PCRF.

The SGSN is responsible for functions such as NAS signaling processing, roaming, and tracking when a UE performs accessing from a UMTS terrestrial radio access network UTRAN or a GSM edge radio access network GERAN; the MME is responsible for performances such as NAS signaling processing, roaming, and tracking when the UE performs accessing from an evolved UMTS terrestrial radio access network EUTRAN; the Serving Gateway (SGW) is responsible for a local mobility anchor and a mobility anchor in a 3GPP system and legal interception related information; and the PDN Gateway (PGW) is responsible for policy execution and charging and legal interception related functions. The PCRF is responsible for policy decision and assignment, QoS, and charging related policies.

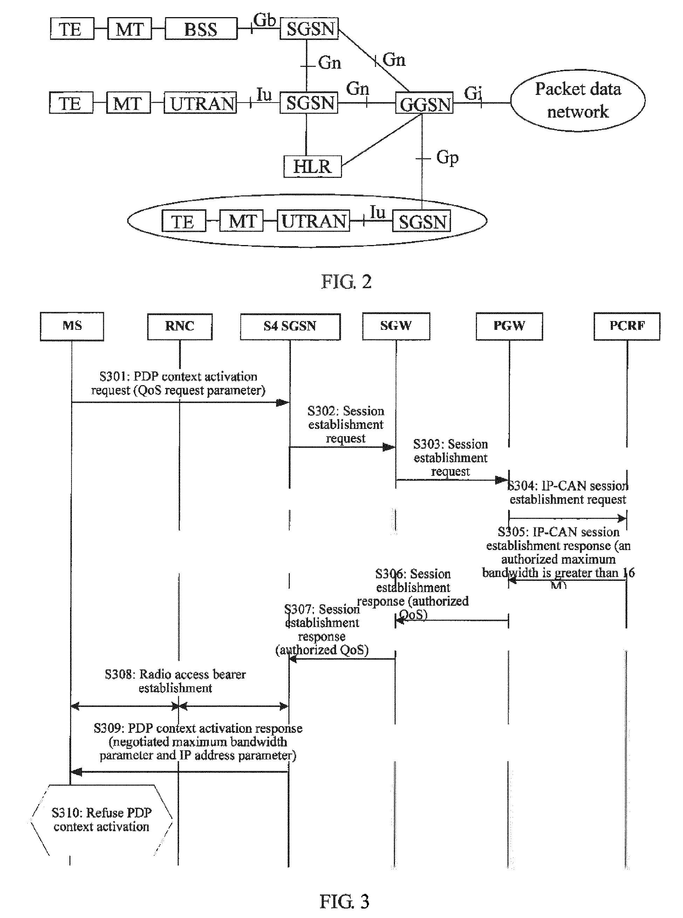

FIG. 2 is a schematic diagram of a GPRS (General Packet Radio Service, general packet radio service) network architecture in the prior art. The SGSN provides mobility management, security management, access control, and route selection capabilities when a user performs accessing from 2G or 3G; and the GGSN is responsible for a connection between the GPRS network and an external data network, and can be connected to multiple data networks such as the Internet, an enterprise network, and an X. 25 network, and the functions of the GGSN are similar to those of the PGW, but the GGSN does not have multiple access capabilities supported by the PGW. In a GPRS system, the gateway GPRS support node GGSN may also interact with the PCRF (not shown in the figure). No matter for the EPS or the GPRS system, a PCRF logic function is optional.

FIG. 3 shows a process of a mobile station MS activating a initial context in the prior art, and through the process, an IP address can be assigned to the MS so as to implement a data service of the MS. Specifically, the process includes:

S301: The MS initiates the initial context activation process, carries a requested QoS parameter, and includes a initial context maximum bandwidth.

S302: An S4 SGSN sends a session establishment request to the SGW, where an APN (Access Point Name, access point name) AMBR (Aggregate Maximum Bit Rate, accumulative maximum bandwidth) is carried in the request, and the APN AMBR is generated by the initial context maximum bandwidth which is requested by the MS, and may also be generated by an EPS subscribed QoS profile which is obtained by the S4 SGSN from an HSS, where the profile includes an APN AMBR parameter, and in this case the maximum bandwidth requested by the UE may be ignored.

S303: The SGW sends the session establishment request to the PGW, where the APN AMBR is included in the request.

S304: The PGW requests establishing an IP-CAN session with the PCRF, where the APN AMBR is carried.

S305: The PCRF authorizes the APN AMBR according to user subscription and an operator policy, and returns an IP-CAN session establishment response.

S306: The PGW returns a session establishment response message, where the APN AMBR and an assigned IP address are carried.

S307: The SGW returns the session establishment response message to the S4 SGSN.

S308: The S4 SGSN instructs an RNC to establish a radio bearer.

S309: The S4 SGSN returns a initial context establishment response message to the MS, where a negotiated initial context maximum bandwidth and the assigned IP address are carried, and the MS may use the address to perform the data service.

That the negotiated maximum bandwidth exceeds 16 M is not supported by a terminal of a version number earlier than 3GPP release 7, while a previous radio access network such as the GERAN whose radio network provides a maximum bandwidth of 160 Kbit/s, so that no problem occurs.

With the advent of a new access technology such as the access technology HSPA+, the maximum bandwidth that an operator is capable of providing can reach 21 M and even higher, that is to say, the authorized maximum bandwidth returned to the UE in S309 in FIG. 3 can exceed 16m. However, in this case, the terminal earlier than the 3GPP release 7 refuses to establish the PDP context (as shown in S310), thereby resulting in being unable to implement the data service by the terminal earlier than the 3GPP release 7.

However, if the uniformly authorized maximum bandwidth of the network is lower than 16 M, the user using a terminal later than the 33GPP release 7 cannot enjoy a bandwidth greater than 16 M, so that the operator that deploys the HSPA+ network cannot make full use of a network resource.

### SUMMARY OF THE INVENTION

Embodiments of the present invention provide a method, an apparatus, and a system for setting a maximum bandwidth, so as to solve a problem in the prior art resulting from the non-matching between a maximum bandwidth supported by a terminal and a maximum bandwidth provided by a network.

In one aspect, an embodiment of the present invention provides a method for setting a maximum bandwidth, and the method includes: obtaining a bandwidth support capability of a UE; reporting the bandwidth support capability of the UE; authorizing a maximum bandwidth matching the bandwidth support capability for the UE according to the bandwidth support capability of the UE, and delivering the maximum bandwidth authorized for the UE.

In another aspect, an embodiment of the present invention further provides a system for setting a maximum bandwidth, and the system includes: an obtaining apparatus, configured to obtain a bandwidth support capability of a UE; a report apparatus, configured to report the bandwidth support capability of the UE; and an authorization apparatus, configured to authorize a maximum bandwidth matching the bandwidth, support capability for the UE according to the bandwidth support capability of the UE, and deliver the maximum bandwidth authorized for the UE.

In another aspect, an embodiment of the present invention further provides a system for setting a maximum bandwidth, and the system includes: SGSN, configured to obtain a bandwidth support capability of a UE, and report the bandwidth support capability of the UE to a serving gateway SGW; the serving gateway SGW, configured to report the bandwidth support capability of the UE to a packet data network gateway PGW; the PGW, configured to report the bandwidth support capability of the UE to a policy and charging control entity PCRF; and the PCRF, configured to authorize a maximum bandwidth matching the bandwidth support capability for the UE according to the bandwidth support capability of the UE, and deliver the maximum bandwidth authorized for the UE.

In another aspect, an embodiment of the present invention provides a system for setting a maximum bandwidth, and the system includes: a PGW, configured to obtain a bandwidth support capability of a UE from PCO options of a context activation message sent by the and report the bandwidth support capability of the UE to a PCRF; and the PCRF, configured to authorize a maximum bandwidth matching the bandwidth support capability for the UE according to the bandwidth support capability of the UE, and deliver the maximum bandwidth authorized for the

In another aspect, an embodiment of the present invention further provides a system for setting a maximum bandwidth, and the system includes: an SGSN, configured to obtain a bandwidth support capability of a UE and report the bandwidth, support capability of the UE to a GGSN; and the GGSN, configured to authorize a maximum bandwidth matching the bandwidth support capability for the UE according to the bandwidth support capability of the UE, and deliver the maximum bandwidth authorized for the UE.

In In another aspect, an embodiment of the present invention further provides an apparatus for setting a maximum bandwidth, and the apparatus includes: an obtaining unit, configured to obtain a bandwidth support capability of a UE; and authorization unit, configured to authorize a maximum bandwidth matching the bandwidth support capability for the UE according to the bandwidth support capability of the UE, and deliver the maximum bandwidth authorized for the UE.

In another aspect, an embodiment of the present invention further provides a method for setting a maximum bandwidth, and the method includes: obtaining a bandwidth support capability of a UE; and authorizing a maximum bandwidth matching the bandwidth support capability for the UE according to the bandwidth support capability of the UE, and delivering the maximum bandwidth authorized for the UE.

Beneficial effects of the embodiments of the present invention lie in that: in the technical solutions of the embodiments of the present invention, through obtaining the bandwidth support capability of the UE, the UE is authorized with the maximum bandwidth matching its capability, so that bandwidth, demands of different types of terminals can be satisfied, thereby making full use of a network resource.

### BRIEF DESCRIPTION OF THE DRAWINGS

FIG. 1 is a schematic diagram of an EPS architecture in the prior art;

FIG. 2 is a schematic diagram of a GPRS network architecture in the prior art;

FIG. 3 is a flow chart of an MS, activating a initial context in the prior art;

FIG. 4 is a first overall flow chart of a method according to an embodiment of the present invention;

FIG. 5 is a first schematic diagram of a connection relationship of a system according to an embodiment of the present invention;

FIG. 6 is a second schematic diagram of a connection relationship of a system according to an embodiment of the present invention;

FIG. 7 is a first flow chart of a detailed service for setting a maximum bandwidth by adopting a system according to an embodiment of the present invention;

FIG. 8 is a second flow chart of a detailed service for setting a maximum bandwidth by adopting a system according to an embodiment of the present invention;

FIG. 9 is a third flow chart of a detailed service for setting a maximum bandwidth by adopting a system according to an embodiment of the present invention;

FIG. 10 is a fourth flow chart of a detailed service for setting a maximum bandwidth by adopting a system according to an embodiment of the present invention;

FIG. 11 is a fifth flow chart of a detailed service for setting a maximum bandwidth by adopting a system according to an embodiment of the present invention;

FIG. 12 is a third schematic diagram of a connection relationship of a system according to an embodiment of the present invention;

FIG. 13 is a sixth flow chart of a detailed service for setting a maximum bandwidth by adopting a system according to an embodiment of the present invention;

FIG. 14 is a functional block diagram of an apparatus according to an embodiment of the present invention;

FIG. 15 is a second overall flow chart of a method according to an embodiment of the present invention.

### DETAILED DESCRIPTION OF THE EMBODIMENTS

After an operator deploys an HSPA+ network, the HSPA+ supports an access bandwidth greater than 16 M, but a part of terminals only support a bandwidth parameter lower than 16 ; if a bandwidth authorized for the terminals is greater than 16 M, the terminals cannot activate a first context, so that a data service cannot be implemented; and if all terminals are authorized with a bandwidth lower than 16 M, a user using a new terminal cannot enjoy experience of a bandwidth greater than 16.

Embodiments of the present invention provide a method, an apparatus, and a system for setting a maximum bandwidth to solve the foregoing problem. In the technical solutions of the embodiments of the present invention, through obtaining a bandwidth support capability of a user equipment UE, the UE is authorized with a maximum bandwidth matching the capability. The bandwidth support capability may be embodied in version information of the UE, for example, a version earlier than 3GPP release 7 does not support a negotiated maximum bandwidth greater than 16M, while a later version supports the negotiated maximum bandwidth greater than 16 M and in addition, in the following embodiments, the version information of the UE is used to indicate the bandwidth support capability of the UE, but actually other information may also be adopted to indicate the bandwidth support capability of the UE.

To make the objectives, technical solutions, and advantages of the embodiments of the present invention clearer, the technical solutions according to the embodiments of the present invention are clearly and completely described in the following with reference to the accompanying drawings in the embodiments of the present invention. Apparently, the described embodiments are a part of the embodiments rather than all of the embodiments of the present invention. All other embodiments obtained by persons of ordinary skill in the art based on the embodiments of the present invention without creative efforts shall fall within the protection scope of the present invention.

### Embodiment 1

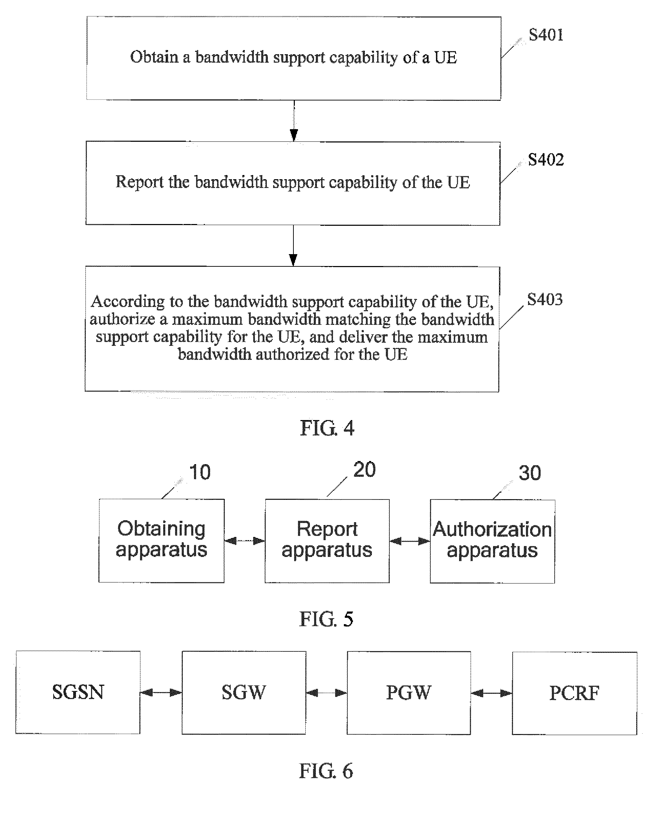

An embodiment provides a method for setting a maximum bandwidth, and FIG. 4 is an overall flow chart of the method. As shown in FIG. 4, the method includes:

S401: Obtain a bandwidth support capability of a UE.

S402: Report the bandwidth support capability of the UE.

S403: Authorize a maximum bandwidth matching the bandwidth, support capability for the UE according to the bandwidth support capability of the UE, and deliver the maximum bandwidth authorized for the UE.

Optionally, S401 specifically includes: obtaining the bandwidth support capability of the UE from an RNC; or obtaining the bandwidth support capability of the UE from PCO options of a context activation message sent by the UE.

Optionally, to save a signaling resource, the reporting step specifically includes: caching the reported bandwidth support capability of the UE; no longer reporting if the obtained bandwidth support capability of the UE is reported; and otherwise, reporting the obtained bandwidth support capability of the UE.

Optionally, the bandwidth support capability includes: information used to indicate whether the UE supports a specific bandwidth, or information of a version supported by the UE. The specific bandwidth may be 16 M.

According to a different bandwidth support capability of the UE, the method may specifically include the following several cases:

(1) When the obtained bandwidth support capability of the UE is lower than the specific bandwidth, or the version supported by the UE is a version earlier than a specific version, or the obtained bandwidth support capability of the UE is unknown, or the bandwidth support capability of the UE is not obtained, the UE is authorized with a maximum bandwidth, not greater than the specific bandwidth.

(2) When the obtained bandwidth support capability of the UE is greater than the specific bandwidth, the UE is authorized with a maximum bandwidth according to subscription information and/or an operator policy.

(3) After the obtained bandwidth support capability of the UE is unknown, or after the bandwidth support capability of the UE is not obtained, the bandwidth support capability of the UE is reobtained, the UE is reauthorized with a maximum bandwidth matching the bandwidth support capability according to the reobtained bandwidth, support capability of the UE.

In the method of the Embodiment, through obtaining the bandwidth support capability of the UE, the UE is authorized with the maximum bandwidth matching its capability, so that bandwidth demands of different types of terminals can be satisfied, thereby making full use of a network resource. This bandwidth negotiation mechanism effectively avoids a problem that a terminal service cannot be established due to the authorized maximum bandwidth being greater than a bandwidth, supported by the terminal, and a problem that the network resource is wasted due to the authorized maximum bandwidth being lower than the bandwidth supported by the terminal.

### Embodiment 2

An embodiment provides a system for setting a maximum bandwidth, and FIG. 5 is a schematic diagram of a connection relationship of the system. As shown in FIG. 5, the system includes: an obtaining apparatus 10, configured to obtain a bandwidth support capability of a UE; a report apparatus 20, configured to report the bandwidth support capability of the UE; and an authorization apparatus 30, configured to authorize a maximum bandwidth matching the bandwidth support capability for the UE according to the bandwidth support capability of the UE, and deliver the maximum bandwidth authorized for the UE.

Optionally, the obtaining apparatus 10 is specifically configured to obtain the bandwidth support capability of the UE from an RNC; or obtain the bandwidth support capability of the UE from PCO options of a context activation message sent by the UE.

Optionally, the report apparatus 20 is specifically configured to cache the reported bandwidth support capability of the UE; no longer report if the obtained bandwidth support capability of the UE is reported; and otherwise, report the bandwidth support capability of the UE.

The bandwidth support capability includes information used to indicate whether the UE supports a specific bandwidth. According to a difference of the obtained bandwidth support capability of the UE, functions completed by the system of the embodiment are different:

(1) When the bandwidth support capability which is of the UE and is obtained by the obtaining apparatus 10 is lower than the specific bandwidth, or a version supported by the UE is a version earlier than a specific version, or the obtained bandwidth support capability of the UE is unknown, or the bandwidth support capability of the UE is not obtained, the authorization apparatus 20 is configured to authorize a maximum bandwidth not greater than the specific bandwidth for the UE.

(2) When the bandwidth support capability which is of the UE and is obtained by the obtaining apparatus 10 is greater than the specific bandwidth, the authorization apparatus 20 is configured to authorize a maximum bandwidth according to subscription information and/or an operator policy for the UE.

(3) When the bandwidth support capability which is of the UE and is obtained by the obtaining apparatus 10 is unknown, or after the bandwidth support capability of the UE is not obtained, the bandwidth, support capability of the UE is reobtained, the authorization apparatus 20 is configured to reauthorize a maximum bandwidth matching the bandwidth support capability for the UE according to the reobtained bandwidth support capability of the UE.

In the system of the Embodiment, through obtaining the bandwidth, support capability of the UE, the UE is authorized with the maximum bandwidth, matching its capability, bandwidth demands of different types of terminals can be satisfied, thereby making full use of a network resource, and affectively avoiding a problem that a terminal service cannot be established due to the authorized maximum bandwidth being greater than a bandwidth supported by the terminal, and a problem that the network resource is wasted due to the authorized maximum bandwidth being lower than the bandwidth supported by the terminal.

### Embodiment 3

An embodiment provides a system for setting a maximum bandwidth. FIG. 6 is a schematic diagram of a connection relationship of the system. As shown in FIG. 6, the system includes: an SGSN, configured to obtain a bandwidth support capability of a UE, and report the bandwidth support capability of the UE to a serving gateway SGW; the serving gateway SGW, configured to report the bandwidth support capability of the UE to a packet data network gateway PGW; the PGW, configured to report the bandwidth support capability of the UE to a policy and charging control entity PCRF; and the PCRF, configured to authorize a maximum bandwidth matching the bandwidth support capability for the UE according to the bandwidth support capability of the UE, and deliver the maximum bandwidth authorized for the UE.

Optionally, the system further includes a radio network controller RNC, and the SGSN is specifically configured to obtain the bandwidth support capability of the UE from the RNC.

Optionally, the SGW and the PGW cache the reported bandwidth support capability of the UE; no longer report if the obtained bandwidth support capability of the UE is reported; and otherwise, report the bandwidth support capability of the UE.

Optionally, the SGW is further configured to report the bandwidth support capability of the UE to the PCRF by establishing a gateway control session request; and the PGW is further configured to, through establishing an IP connectivity access network session, receive the maximum bandwidth which is delivered by the PCRF and authorized for the UE.

In the system of the embodiment, through obtaining the bandwidth support capability of the UE, the UE is authorized with the maximum bandwidth matching its capability, bandwidth demands of different types of terminals can be satisfied, thereby making full use of a network resource, and effectively avoiding a problem that a terminal service cannot be established due to the authorized maximum bandwidth being greater than a bandwidth supported by the terminal, and a problem that the network resource is wasted due to the authorized maximum bandwidth being lower than the bandwidth supported by the terminal.

An operating principle of the system of the embodiment is illustrated in the following with reference to the specific service flow charts.

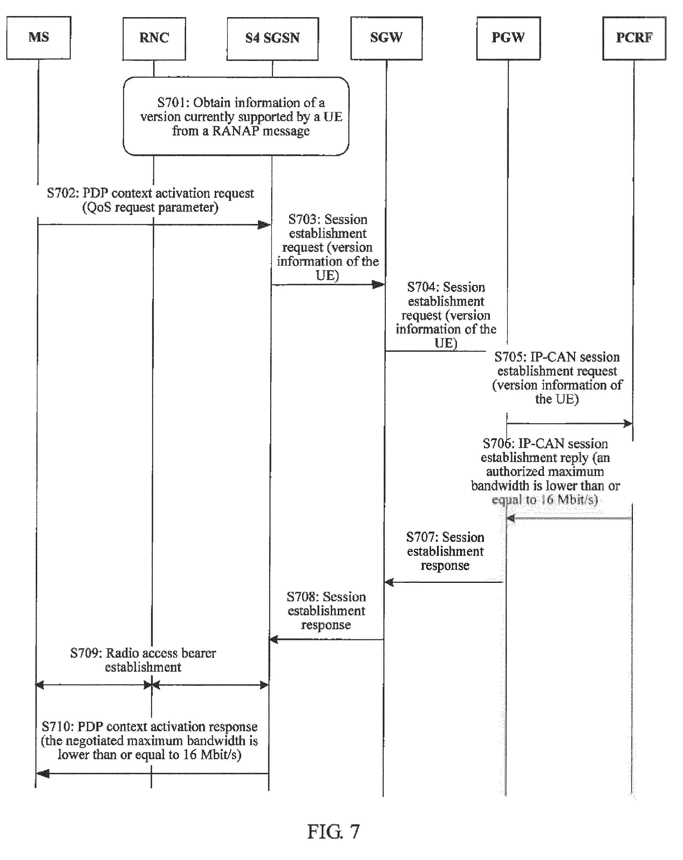

FIG. 7 is a first flow chart of a detailed service for setting a maximum bandwidth, by adopting the system of the embodiment. The flow chart is applicable to an EPS (Evolved Packet System) system defined by the 3GPP standard organization, and the PCRF is deployed, the GTPV2 protocol is adopted between the SGW and the PGW, and during initial access of a user, an 54 SGSN obtains from the RNC information of a version of the UE as a 3GPP release 6 version (a QoS parameter greater than 16 M is not supported). As shown in FIG. 7:

S701: The S4 SGSN obtains information of the version currently supported by the UE from a RANAP message of the RNC.

S702: An MS initiates a initial contextactivation process, where a requested QoS parameter is carried and a initial context maximum bandwidth is included, and the value is assumed to be 2 M in the embodiment.

S703: The S4 SGSN sends a session establishment request to the SGW, where an APN AMBR is carried, the APN AMBR is generated by the initial context maximum bandwidth requested by the MS, and may also be generated by an EPS subscribed QoS profile (the profile includes an APN AMBR parameter) which is obtained by the S4 SGSN, from an HSS (the initial context maximum bandwidth requested by the UE is ignored), and the message carries the information of the version currently supported by the UE at the same time.

Note: Because the version information only affects QoS authorization, it may also be changed into another parameter, such as information about whether the UE supports a bandwidth greater than 16 M.

S704: The SGW sends the session establishment request to the PGW, where the APN AMBR and the information of the version currently supported by the UE are included.

S705: The PGW establishes an IP-CAN session with the PCRF, where the APN AMBR and the information of the version currently supported by the UE are included.

S706: The PCRF authorizes the APN AMBR according to the information of the version currently supported by the UE while also taking user subscription and an operator policy into consideration, if the current version information of the UE is earlier than R7, the authorized APN AMBR is lower than or equal to 16 M (in the embodiment, if it is assumed that the version information of the UE of the MS is the 3GPP R6, the authorized APN AMBR is lower than or equal to 16 M), and the authorized APN AMBR is returned to the PGW through an IP-CAN session establishment reply.

S707: The PGW returns a session establishment response message, where the authorized APN AMBR is carried.

S708: The SGW returns the session establishment response message to the S4 SGSN.

S709: The S4 SGSN instructs the RNC to establish a radio bearer.

S710: The S4 SGSN returns a initial context establishment response message to the MS, and for the embodiment, the authorized APN AMBR is lower than or equal to 16 M.

It can be seen from FIG. 7 that, for a UE earlier than R7 (a QoS parameter greater than 16 M is not supported), though a subscribed bandwidth of the MS is greater than 16 M, the bandwidth actually authorized by the PCRF is lower than or equal to 16 M, which avoids a problem of initial context deactivation of the UE due to the returned QoS bandwidth being too large.

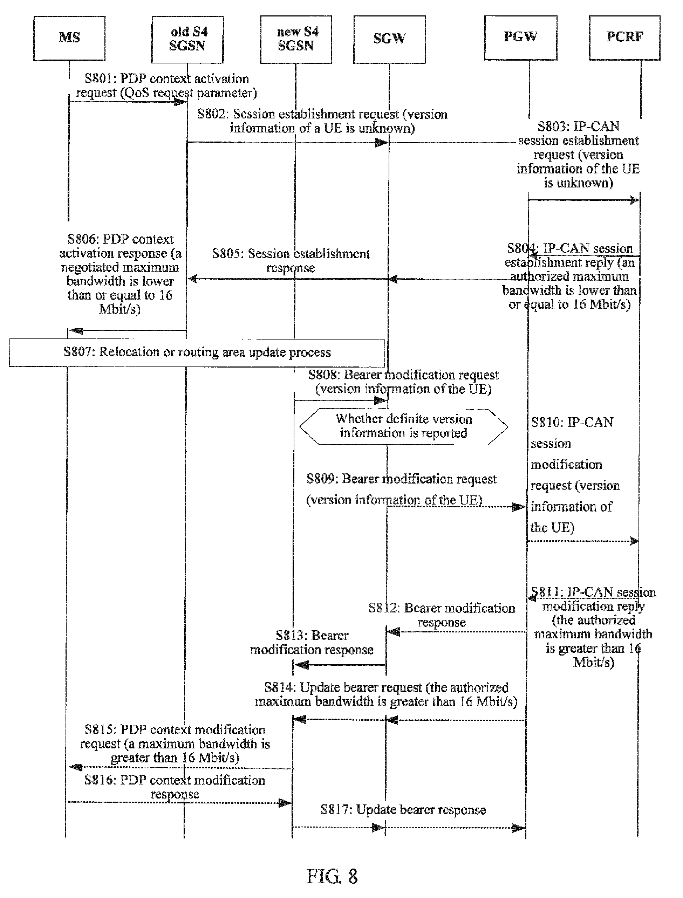

FIG. 8 is a second flow chart of a detailed service for setting a maximum bandwidth by adopting the system of the embodiment. The flow chart is applicable to the EPS (Evolved Packet System) system defined by the 3GPP standard organization, where the PCRF is deployed, the GTPV2 protocol is adopted between the SGW and the PGW, and during initial access af the user, the S4 SGSN, cannot obtain the version information of the UE from a radio access side, and subsequently the UE moves to a new S4 SGSN, and the S4 SGSN can obtain the version information of the UE as the 3GPP release 7 version (where a QoS parameter greater than 16 M is supported), and as shown in FIG. 8 (note: in FIG. 8, a radio access network element, such as a BSS of 2G and an RNC of 3G, is ignored):

S801: The MS initiates a initial context activation process, where a requested QoS parameter is carried and a initial context maximum bandwidth is included.

S802: An old S4 SGSN, sends the session establishment request to the SGW, where the APN AMBR is carried, the APN AMBR is generated by the initial context maximum bandwidth requested by the MS, and may also be generated by the EPS subscribed QoS profile (the profile includes the APN AMBR parameter) which is obtained by the old S4 SGSN from the HSS (the initial context maximum bandwidth requested by the UE is ignored).

Because the old S4 SGSN cannot obtain the version information of the UE, the version information which is of the UE and is carried by the old S4 SGSN is unknown (or it is unknown that the UE supports the parameter greater than 16 M), and the old S4 SGSN may not carry any version information parameter (or the UE supports the parameter greater than 16 M) to indicate unknown; and the SGW sends the message to the PGW.

Note: That the old S4 SGSN cannot obtain the version information of the UE may be due to the following three reasons:

A: The user performs accessing from the 2G radio network, and in this case, the old S4 SGSN cannot obtain the version information of the UE from the BSS.

B: The user performs accessing from the 3G radio network, but the RNC does not perform software upgrade, and therefore, the RNC has the version information of the UE but cannot report the version information to the old S4 SGSN.

C: The user performs accessing from the radio network, and the RNC supports the reporting, but the old S4 SGSN does not perform software upgrade, and therefore, the version information which is of the UE and is reported by the RNC is not understood.

S803: The PGW establishes an IP-CAN session with the PCRF, where the APN AMBR is carried and the information of the version (the UE supports the parameter greater than 16 M) currently supported by the UE is unknown, or the version (the UE supports the parameter greater than 16 M) information is not carried.

S804: The PCRF authorizes the APN AMBR, and returns an authorization result through the IP-CAN session establishment reply; and if the current version (the UE supports the parameter greater than 16 M) information of the UE is unknown, to ensure that the establishment of the initial contextof the user is successful, the APN AMBR authorized by the PCRF is lower than or equal to 16 M.

S805: The PGW returns the session establishment response message to the SGW, where the authorized APN AMBR is carried, and the SGW forwards the message to the old S4 SGSN.

S806: The old S4 SGSN instructs a radio side to establish the radio bearer (not shown in the figure) and returns the initial context activation response message to the MS, and the initial context maximum bandwidth which is carried and authorized is lower than or equal to 16M.

Subsequently the UE switches in an ACTIVE state (relocation) or moves in an IDLE state (RAU) to a management scope of a new S4 SGSN (it should be noted that, in the embodiment, although the S4 SGSN is changed, the SGW is not changed), and the new S4 SGSN can obtain the version information of the UE from the RNC, for example, the UE switches from the 2G network to the 3G network.

S808: The new S4 SGSN sends a bearer modification request message to the SGW, where the message carries the version information of the UE (information that the supports the parameter greater than 16 M).

Note: A bearer modification request is a message in the existing relocation or RAU process, and in the embodiment, the trigger time sequence of the message is not changed, and the version (the UE supports the parameter greater than 16 M) information parameter is added in the message.

S809: The SGW judges whether the version (the UE supports the parameter greater than 16 M) information of the UE is reported, and if it is reported, steps after S809 can be omitted to avoid unnecessary message exchange. For the example, because the version (the UE supports the parameter greater than 16 M) information previously reported by the SGW is unknown, but now definite version (the UE supports the parameter greater than 16 M) information exists, and therefore, the SGW needs to transfer the message to the PGW through the bearer modification request message.

S810: The PGW modifiers the IP-CAN session with the PCRF, where the version (the UE supports the parameter greater than 16 M) information currently supported by the UE is carried.

S811: The PCRF obtains the information of the version (the UE supports the parameter greater than 16 M) currently supported by the UE, reauthorizes the APN AMBR, and returns the authorization result to the PGW through an IP-CAN session modification reply. In the example, the UE supports the parameter greater than 16 M, and if it is assumed that the APN AMBR subscribed by the UE is 21 M, the APN AMBR reauthorized by the PCRF is 21 M.

S812: The PGW returns a bearer modification response message to the SGW.

S813: The SGW returns the bearer modification response message to the new S4 SGSN.

S814 to S817: The PGW initiates a bearer update request process, and the APN AMBR is remodified to 21 M.

It can be seen from FIG. 8 that, if a terminal of R7 (supporting the QoS parameter greater than 16 M) performs accessing from the 2G network (or accessing from the 3G network which does not support the reported UE version), initially the authorized QoS is lower than 16 M, but when the terminal of R7 moves to the 3G network which supports the reported UE version, the PCRF performs reauthorization, so that the terminal of R7 can use a high-bandwidth service with a bandwidth greater than 16 M.

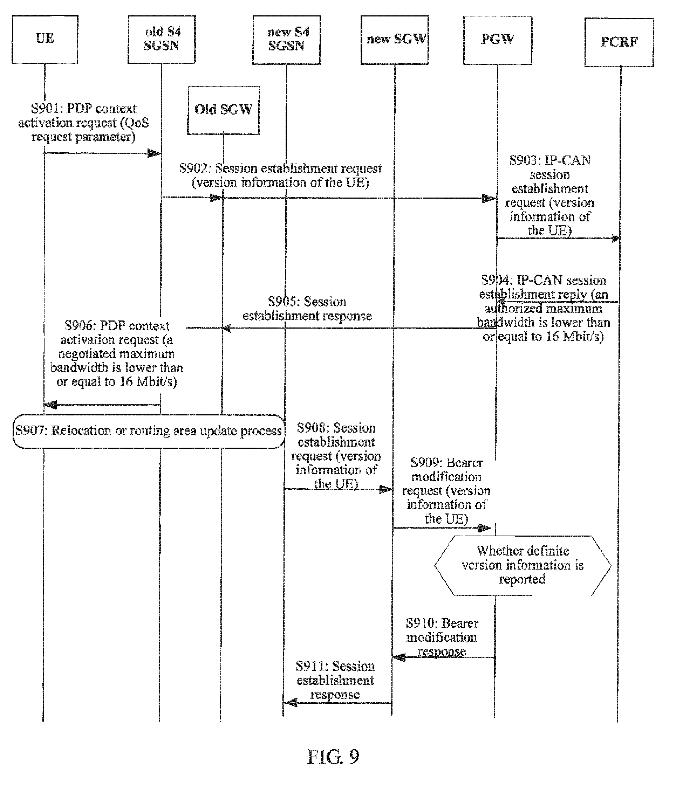

FIG. 9 is a third flow chart of a detailed service for setting a maximum bandwidth by adopting the system of the embodiment. The flow chart is applicable to the EPS (Evolved Packet System) system defined by the 3GPP standard organization, and the PCRF is deployed, the GTPV2 protocol is adopted between the SGW and the PGW, and during initial access of the user, the S4 SGSN can obtain the version information from the radio access side, and subsequently the UE moves to a new S4 SGSN, and the S4 SGSN can also obtain the version information of the UE as the 3GPP release 6 version (where the QoS parameter greater than 16 M is not supported), and as shown in FIG. 9:

S901 to S906 are the same as the corresponding steps in FIG. 8, and are not described here again.

S907: Subsequently the UE switches in the ACTIVE state (relocation) or moves in the IDLE state (RAU) to a management scope of a new S4 SGSN (in the example, the new S4 SGSN selects a new SGW), and the new S4 SGSN, may also obtain the version information of the UE from the RNC.

S908: The new S4 SGSN sends the session establishment request message to the new SGW, where the message carries the version (the UE does not support the parameter greater than 16 M) information of the UE.

S909: Because it is a switch process, the new SGW sends the bearer modification request to the PGW and instructs the PGW to switch to the new SGW, and the message carries the version (the UE does not support the parameter greater than 16 M) information of the UE at the same time.

S910: The PGW judges that the version (the UE does not support the parameter greater than 16 M) information is reported to the PCRF, and no longer sends the IP-CAN session modification message to the PCRF (the QoS does not need to be reauthorized); and directly returns a bearer modification request response to the SGW.

S911: The SGW returns the bearer modification request response to the new S4 SGSN.

It can be seen from FIG. 9 that, once the S4 SGSN reports the version (whether the UE supports the parameter greater than 16 M) information of the UE, even though the UE moves to the new S4 SGSN, no matter whether the new S4 SGSN supports to obtain the UE version, it is not required to reauthorize the QoS, thereby avoiding unnecessary signaling exchange, and saving the network resource.

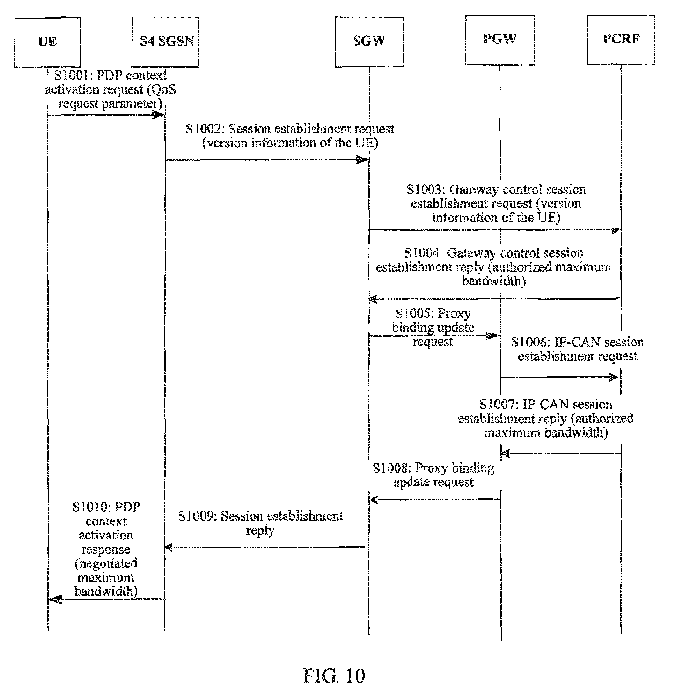

FIG. 10 is a fourth flow chart of a detailed service for setting a maximum bandwidth by adopting the system of the embodiment. The flow chart is applicable to the EPS (Evolved Packet System) system defined by the 3GPP standard organization. What is different from FIG. 7 is that the PMIP protocol instead of the GTPV2 protocol is adopted between the SGW and the PGW. In this case, the SGW cannot transfer the UE version (whether the parameter greater than 16 M is supported) information to the PGW through a PMIP message, but instead transfers the information to the PCRF by the SGW through a gateway control session between the SGW and the PCRF, and as shown in FIG. 10:

S1001: The MS initiates the initial context activation process, where the requested QoS parameter is carried and the initial context maximum bandwidth is included.

S1002: The S4 SGSN sends the session establishment request to the SGW, where the APN AMBR is carried, the APN AMBR is generated by the initial context maximum bandwidth requested by the MS, and may also be generated by the EPS subscribed QoS profile (the profile includes the APN AMBR parameter) obtained by the S4 SGSN (the initial context maximum bandwidth requested by the UE is ignored), and the message carries the version (whether the UE supports the parameter greater than 16 M) information currently supported by the UE at the same time.

Note: In the embodiment, the step of obtaining the version information from the RNC is omitted.

S1003: The SGW sends the gateway control session establishment request to the PCRF, where the APN AMBR and the information of the version currently supported by the UE are included.

S 1004: The PCRF authorizes the APN AMBR, and returns the authorization result to the SGW through the gateway control session establishment reply, where the authorization is performed according to the information of the version currently supported by the UE and further taking the user subscription and the operator policy into consideration, and if the current version information of the UE is earlier than R7, the authorized APN AMBR is lower than or equal to 16 M.

S1005: The SGW sends a binding update request message to the PGW, and instructs the PGW to establish a data connection to the SGW.

S1006: The PGW establishes an IP-CAN session the PCRF.

S1007: The PCRF returns the APN AMBR authorized in step S1004 to the PGW.

S 1008: The PGW returns a binding update reply message to the SGW.

S1009: The SGW returns the session establishment response message to the S4 SGSN, where the APN AMBR authorized and returned in step S1004 is carried.

S1010: The S4 SGSN returns the initial context establishment response message to the MS, and in the embodiment, the authorized initial context maximum bandwidth is lower than or equal to 16 M.

It can be seen from FIG. 10 that, if the S4 SGSN cannot obtain the version information initially, and can subsequently obtain the version information when moving to the new S4 SGSN, the new S4 SGSN transfers the version information to the SGW, and the SGW also reports the version information through the gateway control session between the SGW and the PCRF, the PCRF, performs reauthorization, and the PCRF returns a new authorization value to the SGW and the PGW, and its process is similar to that in FIG. 8, which is not repeatedly described here again.

### Embodiments 4

An embodiment provides a system for setting a maximum bandwidth, and referring to FIG. 6 again, the system includes: a PGW, configured to obtain a bandwidth support capability of a UE from PCO options of a context activation message sent by the UE, and report the bandwidth support capability of the UE to a PCRF; and the PCRF, configured to authorize a maximum bandwidth matching the bandwidth support capability for the UE according to the bandwidth support capability of the UE, and deliver the maximum bandwidth authorized for the UE.

The system further includes: an SGSN, configured to receive the context activation message sent by the UE and transparently transmit the message to an SGW; and the SGW, configured to receive the context activation message sent by the SGSN and transparently transmit the message to the PGW.

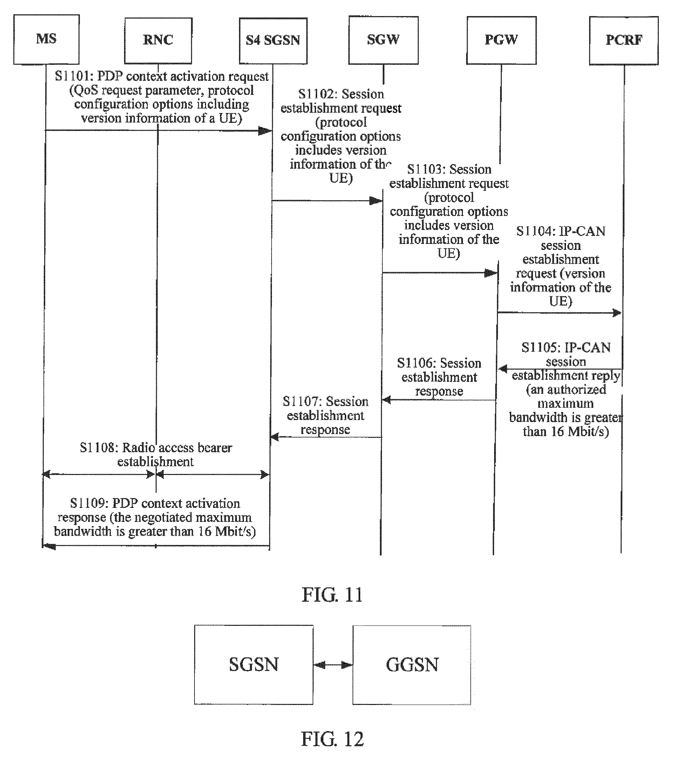

FIG. 11 is a flow chart of a detailed service for setting a maximum bandwidth by adopting the system of the embodiment. The flow chart is applicable to an EPS (Evolved Packet System) system define by the 3GPP standard organization. What is different from FIG. 7 is that in this flow chart, an MS transfers version (whether a parameter greater than 16 M is supported) information of the UE to the PGW through expanding PCO (Protocol Configuration Options), and an intermediate network element, an S4 SGSN, and the SGW are not required to understand the PCO; as shown in FIG. 11:

S1101: The MS initiates a initial context activation process, where a requested QoS parameter is carried, a requested initial context maximum bandwidth is included, and at the same time, the PCO options are carried, the options include the version (whether the parameter greater than 16 M is supported) information of the UE.

S1102: The S4 SGSN sends a session establishment request to the SGW, where an APN AMBR is carried, the APN AMBR is generated by the initial context maximum bandwidth requested by the MS, and may also be generated by an EPS subscribed QoS profile (the profile includes an APN AMBR parameter) obtained by the S4 SGSN (the initial context maximum bandwidth requested by the UE is ignored), and the message carries the PRO options at the same time.

S1103: The SGW sends the session establishment request to the PGW, where the APN AMBR and the PCO options are included.

S 1104: The PGW establishes an IP-CAN session with the PCRF, where the APN AMBR and the information which is of a version (whether the parameter greater than 16 M is supported) currently supported by the UE and is extracted from the PCO are carried.

S1105: The PCRF authorizes the APN AMBR, and returns an authorization result to the PGW through an IP-CAN session establishment reply, where the authorization is performed by taking user subscription and an operator policy into consideration and further according to the information of the version currently supported by the UE, and if the current version (whether the parameter greater than 16 M is supported) information of the UE is earlier than R7 or the UE does not support the parameter greater than 16 M, an authorized APN AMBR needs to be lower than or equal to 16 M; if the PGW does not report the current version (whether the parameter) greater than 16 M is supported) information of the UE, to ensure that the MS can succeed in activation, the authorized APN AMBR also needs to be lower than or equal to 16 M. Specifically for the example, the UE does not support the parameter) greater than 16 M and a subscribed APN AMBR of the UE is lower than 16 M, and then, the APN AMBR authorized by the PCRF is lower than or equal to 16 M.

S 1106: The PGW returns the session establishment response message, where the authorized default bearer QoS and the APN AMBR are carried.

S1107: The SGW returns the session establishment response message to the S4 SGSN.

S1108: The S4 SGSN, instructs the RNC to establish a radio bearer.

S1109: The S4 SGSN, returns the initial context establishment response message to the MS, and for the example, the authorized APN AMBR is lower than or equal to 16 M.

It can be seen from FIG. 11 that, if the MS carries the version information of the UE, the scene from being unknown to being known shown in Embodiment 2 does not exist, and because the MS either supports reporting or does not support reporting, the scene where a change occurs does not exist.

### Embodiment 5

An embodiment provides a system for setting a maximum bandwidth. FIG. 12 is a schematic diagram of a connection relationship of the system. As shown in FIG. 12, the system includes: an SGSN, configured to obtain a bandwidth support capability of a UE and report the bandwidth support capability of the UE to a GGSN; and the GGSN, configured to authorize a maximum bandwidth matching the bandwidth support capability for the UE according to the bandwidth support capability of the UE, and deliver the maximum bandwidth authorized for the UE.

Optionally, the SGSN is specifically configured to obtain the bandwidth support capability of the UE from an RNC.

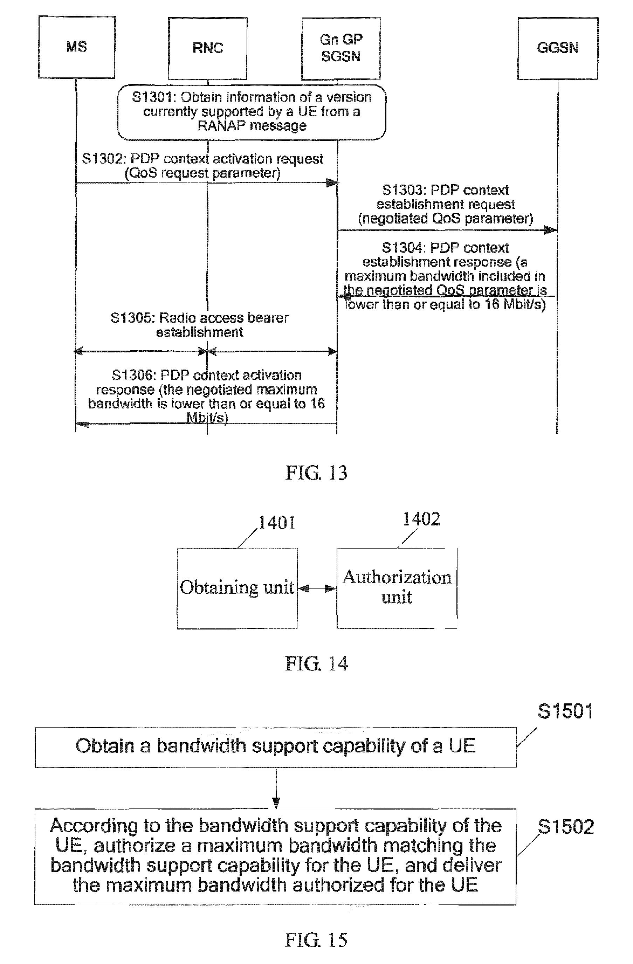

FIG. 13 is a flow chart of a detailed service for setting the maximum bandwidth by adopting the system of the embodiment. The flow chart is applicable to a GPRS (General Packet Radio Service) system defined by the 3GPP standard organization, where no PCRF is deployed, and during initial access of a user, the SGSN (the SGSN that only supports the GTPV1) can obtain version information from a radio access side. As shown in FIG. 13:

S1301: The SGSN obtains the information of a version currently supported by the UE from a RANAP message of the RNC.

S1302: An MS initiates a initial context activation process, where a requested QoS parameter is carried and a requested initial context maximum bandwidth is included.

S1303: The SGSN sends a context establishment request to the GGSN, where a negotiated QoS parameter is carried, the negotiated QoS parameter includes the initial context maximum bandwidth, and the maximum bandwidth may be generated by the initial context maximum bandwidth requested by the MS, and may also be generated by a GPRS subscribed QoS profile (the profile includes an maximum bandwidth parameter of the first context) obtained by the SGSN, and the message carries the information of the version currently supported by the UE at the same time.

Note: Because the version information only affects QoS authorization, it may also be changed into another parameter, such as information about whether the UE supports a bandwidth greater than 16 M.

S1304: The GGSN decides to return the negotiated QoS parameter in the message according to the negotiated QoS information in a request message and the UE version (whether the parameter greater than 16 M is supported) information, where the initial context maximum bandwidth is included; and if the version information of the UE is earlier than Release 7 or the UE does not support the parameter greater than 16 M, though the negotiated QoS maximum bandwidth in the request message is greater than 16 M, the negotiated QoS maximum bandwidth in the returned message needs to be lower than or equal to 16 M.

S1305: The SGSN instructs the RNC to establish a radio bearer.

S1306: The SGSN returns the initial context establishment response message to the MS, and for the example, the authorized MBR needs to be lower than or equal to 16 M.

Note 1: The GGSN in the example may also be a combined node (for example, the PGW) which supports the GTPV1 and the TPV2 at the same time.

Note 2: In a GPRS system, there is also a case that the SGSN cannot obtain the version information of the UE, and the processing is similar to that in FIG. 8 and FIG. 9, which is not repeatedly described here again.

### Embodiment 6

An embodiment provides an apparatus for setting a maximum bandwidth. FIG. 14 is a functional block diagram of the apparatus, and as shown in FIG. 14, the apparatus includes: an obtaining unit 1401, configured to obtain a bandwidth support capability of a UE; and an authorization 1402, configured to authorize a maximum bandwidth, matching the bandwidth support capability for the UE according to the bandwidth support capability of the UE, and deliver the maximum bandwidth authorized for the UE.

Optionally, the bandwidth support capability includes information used to indicate whether the UE supports a specific bandwidth or information of a version supported by the UE; and according to a difference of the obtained bandwidth support capability, the apparatus of the embodiment completes a different authorization process:

(1) When the bandwidth support capability which is of the UE and is obtained by the obtaining unit 1401 is lower than the specific bandwidth, or the version supported by the UE is a version earlier than a specific version, or the obtained bandwidth support capability of the UE is unknown, or the bandwidth support capability of the UE is not obtained, the authorization unit 1402 is configured to authorize a maximum bandwidth not greater than the specific bandwidth for the UE.

(2) When the bandwidth support capability which is of the UE and is obtained by the obtaining unit 1401 is greater than the specific bandwidth, the authorization unit 1402 is configured to authorize a maximum bandwidth according to subscription information and/or an operator policy for the UE.

(3) When the bandwidth support capability which is of the UE and is obtained by the obtaining unit 1401 is unknown, or after the bandwidth support capability of the UE is not obtained, the bandwidth support capability of the UE is reobtained, the authorization unit 1402 is configured to reauthorize a maximum bandwidth matching the bandwidth support capability for the UE according to the reobtained bandwidth support capability of the UE.

The apparatus of the embodiment may be a PCRF, device or a GGSN device in the foregoing embodiments, and may also be another network device which can implement the equivalent functions.

### Embodiment 7

An embodiment of the present invention provides a method for setting a maximum bandwidth, and the method corresponds to the apparatus of the embodiments. FIG. 15 is an overall flow chart of the method, and as shown in FIG. 15, the method includes:

S1501: Obtain a bandwidth support capability of a UE.

S1502: Authorise a maximum bandwidth matching the bandwidth support capability for the UE according to the bandwidth support capability of the UE, and deliver the maximum bandwidth authorized for the UE.

Optionally, the bandwidth support capability includes: information used to indicate whether the UE supports a specific bandwidth, or information of a version supported by the UE.

According to a difference of the obtained bandwidth support capability of the UE, a different authorization manner is adopted in the embodiment:

(1) When the obtained bandwidth, support capability of the UE is lower than the specific bandwidth, or the version supported by the UE is a version earlier than a specific version, or the obtained bandwidth support capability of the UE is unknown, or the bandwidth support capability of the UE is not obtained, the UE is authorized with a maximum bandwidth not greater than the specific bandwidth.

(2) When the obtained bandwidth support capability of the UE is greater than the specific bandwidth, the UE is authorized with a maximum bandwidth according to subscription information and/or an operator policy.

(3) When the obtained bandwidth support capability of the UE is unknown, or after the bandwidth support capability of the UE is not obtained, the bandwidth, support capability of the UE is reobtained, the UE is reauthorized with a maximum bandwidth matching the bandwidth support capability according to the reobtained bandwidth support capability of the UE.

In conclusion, the technical solutions of the embodiments of the present invention adopt the following several points to implement the setting of the maximum bandwidth for the UE:

1. The SGSN obtains the information of the version currently supported by the UE from the RNC, and transfers the version information to the PGW/GGSN/PCRF through the existing signaling; or the UE expands the PCO options in the context activation message, and transfers the information of the 3GPP version (whether the parameter greater than 16 M is supported) currently supported by the UE to the PGW/GGSN/PCRF.

2. The PGW/GGSN/PCRF performs QoS authorization according to the information of the version (whether the parameter greater than 16 M is supported) currently supported by the UE, and if the 3GPP version currently supported by the UE is earlier than release 7 (the parameter greater than 16 M is not supported) or the PGW/GGSN/PCRF does not obtain the information of the 3GYP version (whether the parameter greater than 16 M is supported) currently supported by the UE, the authorized maximum bandwidth needs to be lower than or equal to 16 M.

3. Optionally, the PGW/GGSN/PCRF, after QoS authorization is performed in a case that the information of the version supported by the UE is unknown, further obtains the information of the version (whether the parameter greater than 16 M is supported) currently supported by the UE, and then, the PGW/GGSN/PCRF is required to reauthorize the maximum bandwidth.

4. To avoid repeated reporting of the information of the 3GPP version (whether the parameter greater than 16 M is supported) currently supported by the UE, the SGW/PGW needs to cache the reported 3GYP version (whether the parameter greater than 16 M is supported) information of the UE, and the reported information is not required to be reported again.

In the technical solutions of the embodiments of the present invention, through obtaining the bandwidth support capability of the UE, the UE is authorized with the maximum bandwidth matching its capability, which can satisfy bandwidth demands of different types of terminals, and make full use of the network resource; and can solve a problem that a data service cannot be implemented due to being unable to activate a PDP context after the 3G radio network is upgraded to the HSPA+, the network supports the QoS greater than 16 M, but a part of terminals do not support the bandwidth parameter greater than 16 M whereas the bandwidth authorized by the network side is greater than 16 M.

Persons of ordinary skill in the art may understand that all or a part of the steps of the foregoing method embodiments may be implemented by a program instructing relevant hardware. The foregoing program may be stored in a computer readable storage medium. When the program runs, the steps of the foregoing method embodiments are performed. The foregoing storage medium may be various mediums that are capable of storing program codes, including a ROM, a RAM, a magnetic disk, or a compact disk, and so on.

The foregoing embodiments are merely used for describing the technical solutions of the embodiments of the present invention, and not intended to limit the present invention. Although the embodiments of the present invention is described in detail with reference to the foregoing embodiments, persons of ordinary skill in the art should understand that they can still make modifications to the technical solutions recorded in the foregoing embodiments or make equivalent replacements to some technical features in the technical solutions, and these modifications or replacements do not make the essence of the corresponding technical solutions depart from the spirit and scope of the technical solutions of the embodiments of the present invention.

## Claims

1. A method for setting a maximum bandwidth, comprising:
obtaining a bandwidth support capability of a UE;
reporting the bandwidth support capability of the UE; and
authorizing a maximum bandwidth matching the bandwidth support capability for the UE according to the bandwidth support capability of the UE, and delivering the maximum bandwidth authorized for the UE.

2. The method according to claim 1, wherein the obtaining the bandwidth support capability of the UE comprises:
obtaining the bandwidth support capability of the UE from an RNC; or obtaining the bandwidth support capability of the UE from PCO options of a context activation message sent by the UE.

3. The method according to claim 1, wherein the reporting the bandwidth support capability of the UE comprises:
caching the reported bandwidth support capability of the UE; and
no longer reporting if the obtained bandwidth support capability of the UE is reported; and otherwise, reporting the obtained bandwidth support capability of the UE.

4. The method according to claim 1, wherein the bandwidth support capability comprises :information used to indicate whether the UE supports a specific bandwidth or information of a version supported by the UE.

5. The method according to claim 4, wherein when the obtained bandwidth support capability of the UE is lower than the specific bandwidth, or the version supported by the UE is a version earlier than a specific version, or the obtained bandwidth support capability of the UE is unknown, or the bandwidth support capability of the UE is not obtained,
authorize a maximum bandwidth not greater than the specific bandwidth for the UE.

6. The method according to claim 4, wherein when the obtained bandwidth support capability of the UE is greater than the specific bandwidth, authorize e maximum bandwidth according to subscription information and/or an operator policy for the UE.

7. The method according to claim 4, wherein when the obtained bandwidth support capability of the UE is unknown, or the bandwidth support capability of the UE is not obtained, the bandwidth support capability of the UE is reobtained,
reauthorize a maximum bandwidth matching the bandwidth support capability for the UE according to the reobtained bandwidth support capability of the UE.

8. A system for setting a maximum bandwidth, comprising:
an obtaining apparatus, configured to obtain a bandwidth support capability of a UE;
a report apparatus, configured to report the bandwidth support capability of the UE; and
an authorization apparatus, configured to authorize a maximum bandwidth matching the bandwidth, support capability for the UE according to the bandwidth support capability of the UE, and deliver the maximum bandwidth authorized for the UE.

9. The system according to claim 8, wherein:
the obtaining apparatus is specifically configured to obtain the bandwidth support capability of the UE from an RNC; or obtain the bandwidth support capability of the UE from PCO options of a context activation message sent by the UE.

10. The system according to claim 8, wherein:
the report apparatus is specifically configured to cache the reported bandwidth support capability of the UE; no longer report if the obtained bandwidth support capability of the UE is reported; and otherwise, report the bandwidth, support capability of the UE.

11. The system according to claim 8, wherein the bandwidth support capability comprises :information used to indicate whether the UE supports a specific bandwidth or information of a version supported by the UE.

12. The system according to claim 11, wherein when the obtained bandwidth support capability of the UE is lower than the specific bandwidth, or the version supported by the UE is a version earlier than a specific version, or the obtained bandwidth support capability of the UE is unknown, or the bandwidth support capability of the UE is not obtained,
the authorization, apparatus is configured to authorize a maximum bandwidth not greater than the specific bandwidth for the UE.

13. The system according to claim 11, wherein when the obtained bandwidth support capability of the UE is greater than the specific bandwidth,
the authorization, apparatus is configured to authorize a maximum bandwidth for the UE according to subscription information and/or an operator policy.

14. The system according to claim 11, wherein when the obtained bandwidth support capability of the UE is unknown, or the bandwidth support capability of the UE is not obtained, the bandwidth support capability of the UE is reobtained,
the authorization apparatus is configured to reauthorize a maximum bandwidth matching the bandwidth support capability for the UE according to the reobtained bandwidth support capability of the UE.

15. A system for setting a maximum bandwidth, comprising:
an SGSN, configured to obtain a bandwidth support capability of a UE, and report the bandwidth support capability of the UE to a serving gateway SGW;
the serving gateway SGW, configured to report the bandwidth support capability of the UE to a packet data network gateway PGW;
the PGW, configured to report the bandwidth support capability of the UE to a policy and charging control entity PCRF; and
the PCRF, configured to authorize a maximum bandwidth matching the bandwidth support capability for the UE, and deliver the maximum bandwidth authorized for the UE.

16. The system according to claim 15, further comprising a radio network controller RNC; and the SGSN is specifically configured to obtain the bandwidth support capability of the UE from the RNC.

17. The system according to claim 15, wherein:
the SGW and the PGW are further configured to cache the reported bandwidth support capability of the UE; no longer report if the obtained bandwidth support capability of the UE is reported; and otherwise, report the bandwidth support capability of the UE.

18. The system according to claim 15, wherein:
the SGW is further configured to report the bandwidth support capability of the UE to the PCRF through a gateway control session establishment request; and
the PGW is further configured to, through establishing an IP connectivity access network session, receive the maximum bandwidth which is delivered by the PCRF and authorized for the UE.

19. A system for setting a maximum bandwidth, comprising:
a PGW, configured to obtain a bandwidth support capability of a UE from PCO options of a context activation message sent by the UE, and report the bandwidth support capability of the UE to a PCRF; and
the PCRF, configured to, according to the bandwidth support capability of the UE, authorize a maximum bandwidth matching the bandwidth support capability for the UE, and deliver the maximum bandwidth authorized for the UE.

20. The system according to claim 19, further comprising:
an SGSN, configured to receive the context activation message sent by the UE and transparently transmit the message to an SGW; and
the SGW, configured to receive the context activation message sent by the SGSN and transparently transmit the message to the PGW.

21. A system for setting a maximum bandwidth, comprising:
an SGSN, configured to obtain a bandwidth support capability of a UE, and report the bandwidth support capability of the UE to a GGSN; and
the GGSN, configured to authorize a maximum bandwidth matching the bandwidth support capability for the UE according to the bandwidth support capability of the UE, and deliver the maximum bandwidth authorized for the UE.

22. The system according to claim 21, wherein:
the SGSN, is specifically configured to obtain the bandwidth support capability of the UE from an RNC.

23. An apparatus for setting a maximum bandwidth, comprising:
an obtaining unit, configured to obtain a bandwidth support capability of a UE; and
an authorization unit, configured to authorize a maximum bandwidth matching the bandwidth support capability for the UE according to the bandwidth support capability of the UE, and deliver the maximum bandwidth authorized for the UE.

24. The apparatus according to claim 23, wherein the bandwidth support capability comprises:
information used to indicate whether the UE supports a specific bandwidth or information of a version supported by the UE; and
when the bandwidth support capability which is of the UE and is obtained by the obtaining unit is lower than the specific bandwidth, or the version supported by the UE is a version earlier than a specific version, or the obtained bandwidth support capability of the UE is unknown, or the bandwidth support capability of the UE is not obtained,
the authorization unit is configured to authorize a maximum bandwidth not greater than the specific bandwidth for the UE.

25. The apparatus according to claim 23, wherein the bandwidth support capability comprises :information used to indicate whether the UE supports a specific bandwidth or information of a version supported by the UE; and
when the bandwidth support capability which is of the UE and is obtained by the obtaining unit is greater than the specific bandwidth,
the authorization, unit is configured to authorize a maximum bandwidth for the UE according to subscription information and/or an operator policy.

26. The apparatus according to claim 23, wherein the bandwidth, support capability comprises:
information used to indicate whether the UE supports a specific bandwidth or information of a version supported by the UE; and
when the bandwidth support capability which is of the UE and is obtained by the obtaining unit is unknown, or the bandwidth support capability of the UE is not obtained, the bandwidth support capability of the UE is reobtained,
the authorization unit is configured to reauthorize a maximum bandwidth matching the bandwidth support capability for the UE according to the reobtained bandwidth support capability of the UE.

27. A method for setting a maximum bandwidth, comprising:
obtaining a bandwidth support capability of a UE; and
authorizing a maximum bandwidth matching the bandwidth, support capability for the UE according to the bandwidth support capability of the UE, and delivering the maximum bandwidth authorized for the UE.

28. The method according to claim 27, wherein the bandwidth, support capability comprises :information used to indicate whether the UE supports a specific bandwidth or information of a version supported by the UE.

29. The method according to claim 28, wherein when the obtained bandwidth support capability of the UE is lower than the specific bandwidth, or the version support by the UE is a version earlier than a specific version, or the obtained bandwidth support capability of the UE is unknown, or the bandwidth support capability of the UE is not obtained, authorize a maximum bandwidth not greater than the specific bandwidth for the UE.

30. The method according to claim 28, wherein when the obtained bandwidth support capability of the UE is greater than the specific bandwidth, authorize a maximum bandwidth according to subscription information and/or an operator policy for the UE.

31. The method according to claim 28, wherein when the obtained bandwidth support capability of the UE is unknown, or the bandwidth support capability of the UE is not obtained, the bandwidth support capability of the UE is reobtained, the UE is reauthorized with a maximum bandwidth matching the bandwidth support capability according to the reobtained bandwidth support capability of the UE.
